# EUROPÄISCHE PATENTSCHRIFT

(11) **EP 0 928 717 B1**
(45) Veröffentlichungstag und Bekanntmachung des Hinweises auf die Patenterteilung: **02.05.2003**
(21) Anmeldenummer: 99100252.8
(22) Anmeldetag: 08.01.1999
(51) Int. Cl.: B60N 2/00, B60N 2/42

(54) **Verstelleinrichtung für eine Fahrzeugsitz-Rückenlehne**
Adjusting arrangement for a backrest of a vehicle seat
Mécanisme de réglage de dossiers de sièges de véhicules

(30) Priorität: 09.01.1998 DE 29800290 U
(43) Veröffentlichungstag der Anmeldung: 14.07.1999
(73) Patentinhaber: Johnson Controls GmbH, 51399 Burscheid (DE)
(72) Erfinder: Hoge, Ralf, 42477 Radevormwald (DE); Keil, Guido, 51399 Burscheid (DE); Taylor, Alex, Wednesfield Wolverhapmton WV113EF (GB)
(74) Vertreter: Kutzenberger, Helga, Dr.

(56) Entgegenhaltungen:
- EP-A- 0 747 554
- EP-A- 0 780 259
- EP-A- 0 816 157
- DE-A- 19 522 128
- US-A- 4 700 989
- US-A- 5 310 247
- US-A- 5 368 355
- US-A- 5 697 670

## Beschreibung

Die vorliegende Erfindung betrifft eine Verstelleinrichtung für eine - zumindest zwischen einer auf ein Sitzteil geklappten Tischposition und einer vom Sitzteil hochgeklappten Fahrtposition - verschwenkbar gelagerte Rückenlehne eines Fahrzeugssitzes, mit Arretiermitteln zum Arretieren der in Fahrtposition hochgestellten Rückenlehne in bezüglich ihrer Neigung verschiedenen Stellungen, mit Betätigungsmitteln für mindestens eine zum fahrzeugseitigen, zumindest teilweisen Lösen des Fahrzeugssitzes entriegelbare Sitzfußverriegelung, sowie mit Steuermitteln zur Sicherheitsverriegelung der Betätigungsmittel derart, daß ein Entriegeln der Sitzfußverriegelung in der Fahrtposition der Rückenlehne ausgeschlossen ist, wobei die Steuermittel zur Sicherheitsverriegelung ein die jeweilige Stellung der Rückenlehne abtastendes Fühlerelement, und ein gemeinsam mit dem Fühlerelement in Abhängigkeit von der Stellung der Rückenlehne bewegliches Sperrelement aufweisen, wobei das Sperrelement zum Sperren oder zur Freigabe mit den Betätigungsmitteln für die Sitzfußverriegelung zusammenwirkt.

In der EP 0 738 624 B1 ist eine Verstelleinrichtung für eine verschwenkbar gelagerte Rückenlehne eines Fahrzeugsitzes offenbart. Dieser Kraftfahrzeugsitz weist hintere Füße auf, die mittels einer manuell Iösbaren Verriegelungsvorrichtung mit der Bodenstruktur des Fahrzeugs verbindbar sind. Die Verriegelungsvorrichtung ist mit einer der Rückenlehne zugeordneten Sicherheitseinrichtung gekoppelt. Die Sicherheitseinrichtung gibt die Verriegelungsvorrichtung nur für ein Lösen der Verbindung zwischen den Füßen und der Bodenstruktur frei, wenn die Rückenlehne sich in einer nach vorn geklappten Schwenklage befindet.

Eine der Verriegelungsvorrichtungen ist als Haken ausgebildet. Der Haken hintergreift von hinten und von unten her einen Verbindungsbolzen spielfrei. Der Haken muß deshalb nach hinten, also entgegen dem Uhrzeigersinn geschwenkt werden, um den Verbindungsbolzen freizugeben.

Ein Steuerhebel ist als doppelarmiger Hebel ausgebildet, dessen einer Arm an der eine Steuerkurve bildenden Mantelfläche einer Steuerscheibe anliegt. Der andere Arm ist über einen Seilzug mit dem Haken des hinteren Sitzfußes derart verbunden, daß Letzterer nicht aus seiner Verriegelungsstellung herausgeschwenkt werden kann, wenn der Steuerhebel auf dem hohen zylindrischen Teil der Steuerkurve aufliegt, weil dann der Seilzug gespannt ist. Der Haken kann nur dann den Verbindungsbolzen freigeben, wenn der Seilzug nicht mehr gespannt ist.

In der EP 0 780 259 A1 ist ebenfalls eine Verstelleinrichtung für einen Fahrzeugsitz offenbart. Die Verriegelungsmittel weisen eine Gelenkspindel auf, welche von einem Ende einer Koppelstange getragen wird und zwischen zwei Schlitzen für die Verriegelung verschieblich montiert ist, wobei diese jeweils untereinander beweglich sind. Damit ist der Steuerknüppel in eine Kulissensteuerung integriert, wobei der Steuerknüppel in jeder Position der Rückenlehne in die Kulissensteuerung eingebunden ist.

Sowohl in der US 5,310,247 als auch in der US 5,697,670 sind Arretierungsmittel zum Arretieren der in Fahrtposition hochgestellten Rückenlehne in bezüglich ihrer Neigung verschiedenen Stellungen offenbart.

In der US 5,368,355 sind Fahrzeugsitze offenbart, die längsverschieblich auf Schienen montiert sind. Hierbei kann ein Schwenkhebel nicht gezogen werden, wenn die Rückenlehne des Sitzes nicht in ihre Lagerposition geschwenkt ist. Die Schwenkbewegung der Rückenlehne verursacht, daß ein Bolzen in einen Schlitz gezogen wird. Dieser Schlitz ist mit einem Bowdenzug verbunden, der einen Verschluß aus einem Sperrschlitz des Schwenkhebels zieht. Der Bowdenzug bewirkt ein Anheben der Verriegelung aus dem Verriegelungsschlitz, wenn die Rückenlehne umgeklappt wird. Zwei weitere Bowdenzüge bewirken lediglich ein Anheben von Verriegelungsbolzen bei Betätigung des Schwenkhebels. Erst durch das Anheben der Verriegelungsbolzen läßt sich der Sitz auf den Schienen längsverschieblich in eine Ladeposition verschieben.

In der EP 0 816 157 A1 wird ein Sitz mit einer verschwenkbaren Rückenlehne offenbart, die sich zu einem Sitzteil hin in eine geklappte Tischposition schwenken läßt.

Das Betätigen von Steuermitteln ist nur möglich, wenn der Sitz in einer zur Aufnahme eines Fahrzeuginsassen ungeeigneten Konfiguration ist, z. B. in einer Konfiguration, in der die Sitzlehne auf die Sitzfläche geklappt ist. Hierzu wird ein translatorisch bewegbares Steuermittel verwendet.

Rückenlehnen von Sitzen in Kraftfahrzeugen sollen einerseits in der für die Fahrt zu wählenden Fahrtposition bezüglich ihrer Neigung über einen bestimmten Schwenkbereich hinweg individuell verstellbar sein. Andererseits ist es vor allem für Mittel- oder Rücksitze häufig erwünscht, die Rückenlehne in eine etwa horizontale Lage auf das zugehörige Sitzpolsterteil umzulegen; es handelt sich um eine sogenannte Tischposition, in der die Rückenlehne mit ihrer Rückseite als Tischfläche genutzt werden kann.

Fahrzeugsitze, und zwar insbesondere mittlere und/oder hintere Sitzanlagen beispielsweise in Kleinbussen, sollen häufig auch einfach und schnell sowie ohne Verwendung von Werkzeugen zumindest teilweise so vom Fahrzeug gelöst werden können, daß sie insgesamt aus dem Fahrzeug entfernt oder zumindest einschließlich des Sitzteils umgeklappt werden können (sogenannte Einrollfunktion). Hierzu sind im Bereich der jeweils lösbaren Sitzfüße spezielle Sitzfußverriegelungen angeordnet.

Eine solche Sitzfußverriegelung ist beispielsweise aus der EP 0 747 554 A1 bekannt. Dabei wird ein stift- bzw. bolzenförmiges Befestigungselement in eine fahrzeugseitige Halteöffnung eingesteckt. Innerhalb des Befestigungselementes ist mindestens eine Sperrkugel derart beweglich angeordnet, daß diese in der eingesetzten und verriegelten Stellung durch eine Öffnung des Befestigungselementes hindurch bereichsweise seitlich nach außen ragt und den Rand der Halteöffnung hintergreift. Zum Entriegeln wird ein innerer Sperrbolzen aus dem Bereich der Sperrkugel weggezogen, so daß letztere nach innen ausweichen kann und dadurch das Befestigungselement aus der Halteöffnung entnehmbar ist.

Der vorliegenden Erfindung liegt die Aufgabe zugrunde, unter Gewährleistung einer besonders einfachen und komfortablen Bedienung die Sicherheit der FahrzeugInsassen weitergehend zu verbessern.

Erfindungsgemäß wird dies dadurch erreicht, daß die Betätigungsmittel für die Sitzfußverriegelung einen Schwenkhebel aufweisen, der über einen Bowdenzug oder dergleichen auf die Sitzfußverriegelung wirkt, wobei das Sperrelement eine Ausnehmung und der Schwenkhebel einen Fühleransatz derart aufweisen, daß der Schwenkhebel ausschließlich in der Tischposition der Rückenlehne betätigbar ist, in dem die Ausnehmung in der Tischposition dem Fühleransatz gegenübersteht, so daß der Fühleransatz beim Verschwenken des Schwenkhebels in die Ausnehmung eingreift.

Durch die Erfindung wird zunächst ein sehr hoher Bedienungskomfort erreicht, da sowohl die Arretiermittel als auch die Betätigungsmittel für die Sitzfußverriegelung in die erfindungsgemäße Verstelleinrichtung integriert sind. Zudem wird erfindungsgemäß sichergestellt, daß der Fahrzeugsitz nicht während der Fahrt, d.h. in seiner üblichen Fahrtposition, absichtlich oder unabsichtlich durch Entriegeln der Sitzfußverriegelung zumindest teilweise vom Fahrzeug gelöst werden kann; denn zum Entriegeln der Sitzfußverriegelung muß jedenfalls die Rückenlehne in eine Nichtgebrauchsstellung, insbesondere in die auf das Sitzteil gelegte Tischposition, umgeklappt werden. Dies ist natürlich während der Fahrt praktisch unmöglich, solange sich noch eine Person auf dem Sitz aufhält. Zweckmäßigerweise wird dann die in die Tischposition umgeklappte Rückenlehne bei entriegelter Sitzfußverriegelung automatisch zwangsverriegelt, so daß auch zum Wiederbefestigen des Sitzes im Fahrzeug sich die Rückenlehne in einer Nichtgebrauchsstellung, insbesondere der Tischposition, befinden muß, bis die Sitzfußverriegelung wieder sicher arretiert ist. Erst dann kann die Rückenlehne in ihre Fahrtposition bewegt werden.

In einer vorteilhaften Ausgestaltung kann die im Gelenkbereich der Rückenlehne angeordnete Verstelleinrichtung - und zwar eventuell auch ohne Betätigungsmittel und Sicherheitsverriegelung für die Sitzfußverriegelung - über ein längliches Trägerelement mit einer vom Gelenkbereich abgekehrten, oberen Sicherheitsgurt-Halterung verbunden sein. Hierdurch wird ein sogenanntes Gurtintegrationsmodul gebildet, über das ein oberer Gurtpunkt - zweckmäßigerweise in Form einer Aufwickeleinrichtung eines Automatikgurtes - in die Rückenlehne integriert werden kann. Dies ist vor allem für solche Sitze vorteilhaft, die nicht in direkter Nähe eines stabilen ortsfesten Karosserieteils, insbesondere eines Fahrzeugholmes (B/C-Säule), angeordnet sind. Dies ist beispielsweise bei mittleren Sitzen von Dreierbänken der Fall. Da hierbei alle Reaktionskräfte bzw. -momente von der Rückenlehne über das Trägerelement des Gurtintegrationsmoduls aufgenommen werden müssen, ist hierbei vorzugsweise vorgesehen, daß das Trägerelement zur Bildung eines kraftaufnehmenden Dreieckträgers (starres Kräftedreieck) aus einem in Fahrtrichtung gesehen vorderen Druckprofil und einer hinteren Zugstrebe besteht. Zudem ist das Gurtintegrationsmodul im Bereich der Verstelleinrichtung mit einem ersten Sitzfuß sowie über einen vom Bereich der Verstelleinrichtung ausgehenden Stützträger mit einem in Fahrzeug-Längsachsenrichtung beabstandeten zweiten Sitzfuß verbunden bzw. verbindbar. Dieser Stützträger bildet mit dem Trägerelement somit einen Stützwinkel zur Aufnahme der im Crashfall über den Sicherheitsgurt eingeleiteten Kräfte bzw. Momente. Es sei hierzu bemerkt, daß für den Fall eines Frontalcrashes gefordert wird, daß mindestens 5.000 Nm in Fahrtrichtung und 2.400 Nm gegen Fahrtrichtung schadlos aufgenommen werden müssen. Der Stützträger wird hierbei auf Biegung beansprucht, während das Trägerelement im Bereich des Druckprofils auf Druck sowie im Bereich der Zugstrebe auf Zug beansprucht wird.

Weitere vorteilhafte Ausgestaltungsmerkmale der Erfindung sind in den abhängigen Ansprüchen enthalten und werden in der folgenden Beschreibung noch genauer erläutert werden.

Anhand von in der Zeichnung veranschaulichten, vorteilhaften Ausführungs- und Anwendungsbeispielen soll die Erfindung näher erläutert werden. Es zeigt:
- Fig. 1: eine Perspektivansicht der wesentlichen Tragteile eines mit einer erfindungsgemäßen Verstelleinrichtung ausgerüsteten Fahrzeugsitzes in einer Ausführung als Einzelsitz,
- Fig. 2: eine gesonderte, stark vergrößerte Ansicht einer erfindungsgemäßen Verstelleinrichtung, wobei zur besseren Einsichtnahme bestimmte Teile transparent dargestellt sind,
- Fig. 3: eine Explosionsdarstellung der Verstelleinrichtung mit zusätzlicher Darstellung einer Sitzfußverriegelung in einer ersten, der Fahrtposition der Rückenlehne entsprechenden Situation,

- Fig. 4: eine Darstellung analog zu Fig. 3, jedoch in einer zweiten, einer sogenannten Tischposition der Rückenlehne entsprechenden Situation mit noch nicht entriegelter Sitzfußverriegelung,
- Fig. 5: eine Draufsicht der Verstelleinrichtung in Pfeilrichtung V gemäß Fig. 3 (Fahrtposition),
- Fig. 6: eine Draufsicht der Verstelleinrichtung in Pfeilrichtung VI gemäß Fig. 4 (Tischposition),
- Fig. 7: eine Ansicht analog zu Fig. 6, jedoch in einer Situation mit entriegelter Sitzfußverriegelung und dadurch automatisch bewirkter Zwangsverriegelung der Rückenlehne,
- Fig. 8: eine Seitenansicht eines erfindungsgemäßen Gurtintegrationsmoduls, hier beispielhaft in einer Ausführung mit einer integrierten erfindungsgemäßen Verstelleinrichtung,
- Fig. 9: ein Anwendungsbeispiel der Erfindung für einen Doppelsitz,
- Fig. 10: ein weiteres Anwendungsbeispiel der Erfindung für einen Dreiersitz,
- Fig. 11: ein drittes Anwendungsbeispiel für eine Sitzbank mit ortsfest einzubauendem Sitzteil (ohne Lösbarkeit durch entriegelbare Sitzfußverriegelungen).

In den verschiedenen Figuren der Zeichnung sind gleiche bzw. sich funktionell entsprechende Teile stets mit den gleichen Bezugszeichen versehen und werden daher in der Regel auch jeweils nur einmal beschrieben.

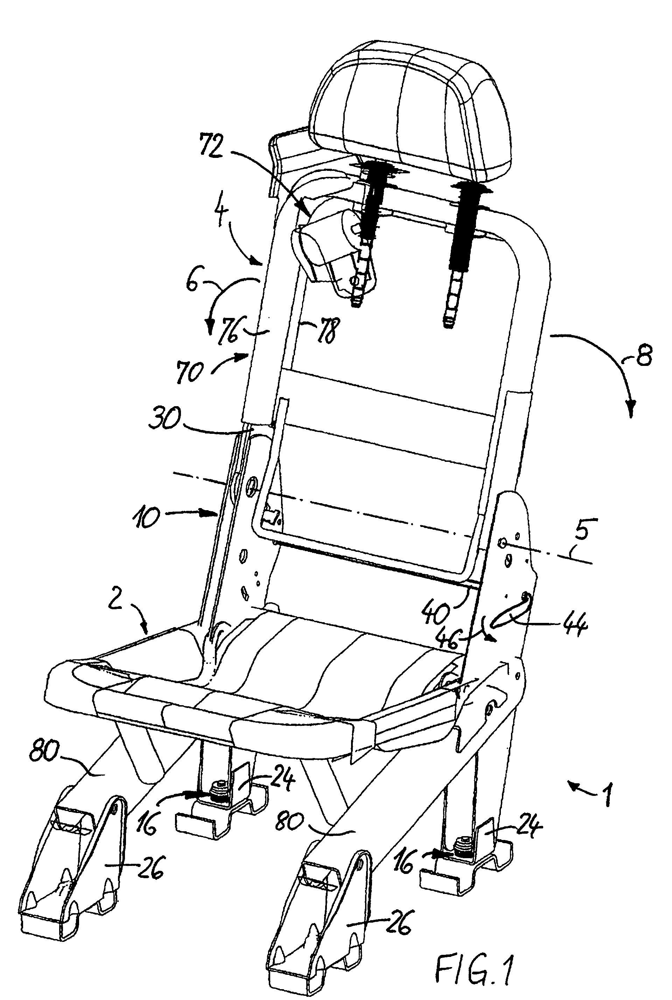

Gemäß Fig. 1 besteht ein Fahrzeugsitz 1, von dem nur die Tragkonstruktion ohne Polster- und Bezugteile dargestellt ist, aus einem Sitzteil 2 und einer Rückenlehne 4. Die Rückenlehne 4 ist aus ihrer dargestellten, etwa vertikal oder leicht nach hinten geneigt stehenden Fahrtposition um eine Lehnen-Schwenkachse 5 in Pfeilrichtung 6 auf das Sitzteil 2 in eine sogenannte Tischposition umlegbar. Ferner ist bevorzugt vorgesehen, daß die Rückenlehne 4 auch in Pfeilrichtung 8 in die entgegengesetzte, vom Sitzteil 2 wegweisende Richtung um die Schwenkachse 5 nach hinten in eine Liegeposition umklappbar ist, in der die Rückenlehne 4 zusammen mit dem Sitzteil 2 eine im wesentlichen horizontale Liegefläche bildet. In dieser bevorzugten Ausgestaltung ist somit die Rückenlehne 4 über einen Winkelbereich von zumindest annähernd 180° hinweg verschwenkbar. In der dargestellten Fahrtposition ist zudem über einen bestimmten Winkelbereich hinweg die Neigung der Rückenlehne 4 verstellbar (wahlweise entsprechend der Pfeilrichtung 6 oder 8).

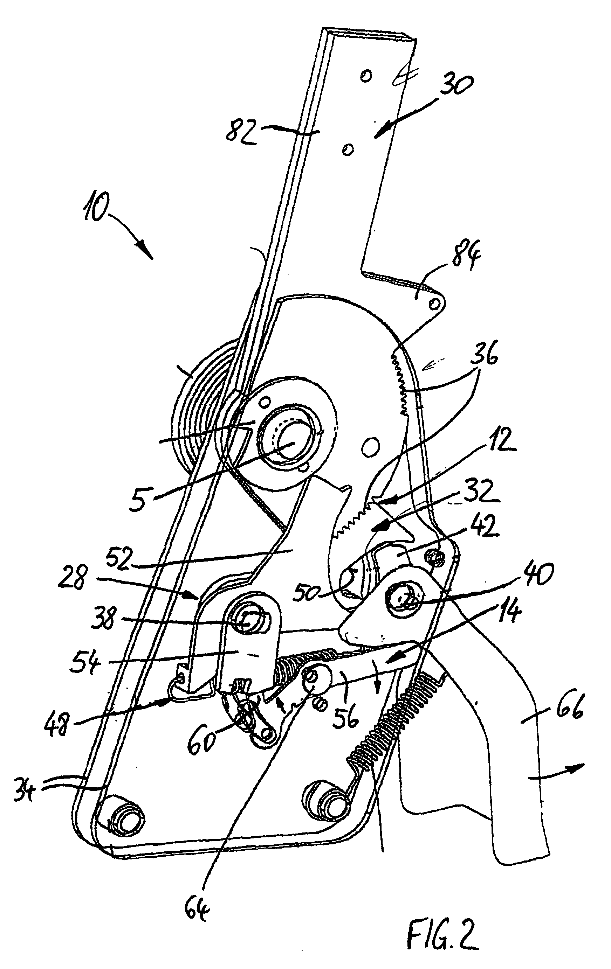

Hierzu ist im Gelenkbereich der Rückenlehne 4 (mindestens) eine erfindungsgemäße Verstelleinrichtung 10 angeordnet, deren Aufbau und Funktion anhand der Fig. 2 bis 7 genauer erläutert werden soll. Demnach weist die erfindungsgemäße Verstelleinrichtung 10 zunächst Arretiermittel 12 zum Arretieren der in die Fahrtposition hochgestellten Rückenlehne 4 in bezüglich ihrer Neigung verschiedenen Stellungen auf. Ferner besitzt die Verstelleinrichtung 10 zweckmäßigerweise integrierte Betätigungsmittel 14 für mindestens eine Sitzfußverriegelung 16, die zum fahrzeugseitigen, wenigstens teilweisen Lösen des Fahrzeugsitzes 1 entriegelbar ist.

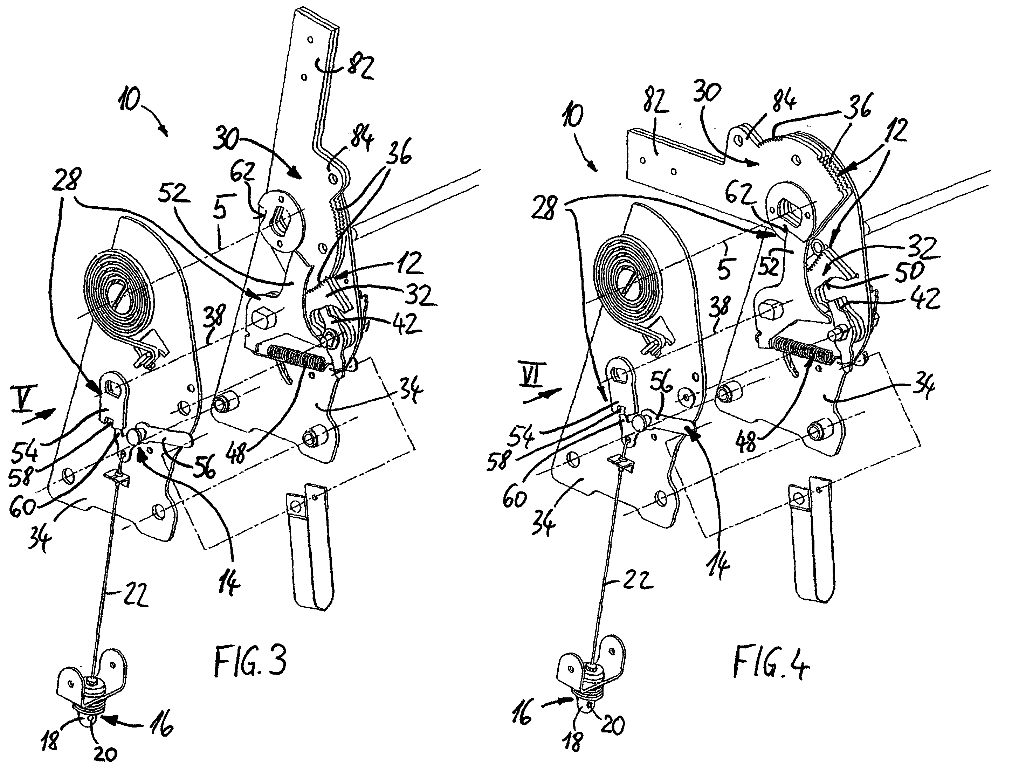

Bevorzugt wird für die Sitzfußverriegelung 16 eine Ausführungsform verwendet, die in der europäischen Patentanmeldung EP 0 747 554 A1 beschrieben ist; auf diese Anmeldung wird an dieser Stelle daher in vollem Umfange Bezug genommen. Es handelt sich hierbei im wesentlichen um ein stift- bzw. bolzenförmiges Befestigungselement 18 (siehe hierzu Fig. 3), welches in eine fahrzeugseitige Halteöffnung eingesteckt werden kann. Innerhalb des Befestigungselementes 18 ist mindestens eine Sperrkugel 20 derart angeordnet, daß diese in der eingesetzten und verriegelten Stellung bereichsweise seitlich nach außen ragt und den Rand der Halteöffnung hintergreift. Zum Entriegeln wird ein innerer Bolzen insbesondere mittels eines Bowdenzuges 22 aus dem Bereich der Sperrkugel 20 weggezogen, so daß letztere nach innen ausweichen kann, wonach das Befestigungselement 18 aus der Halteöffnung entnommen werden kann.

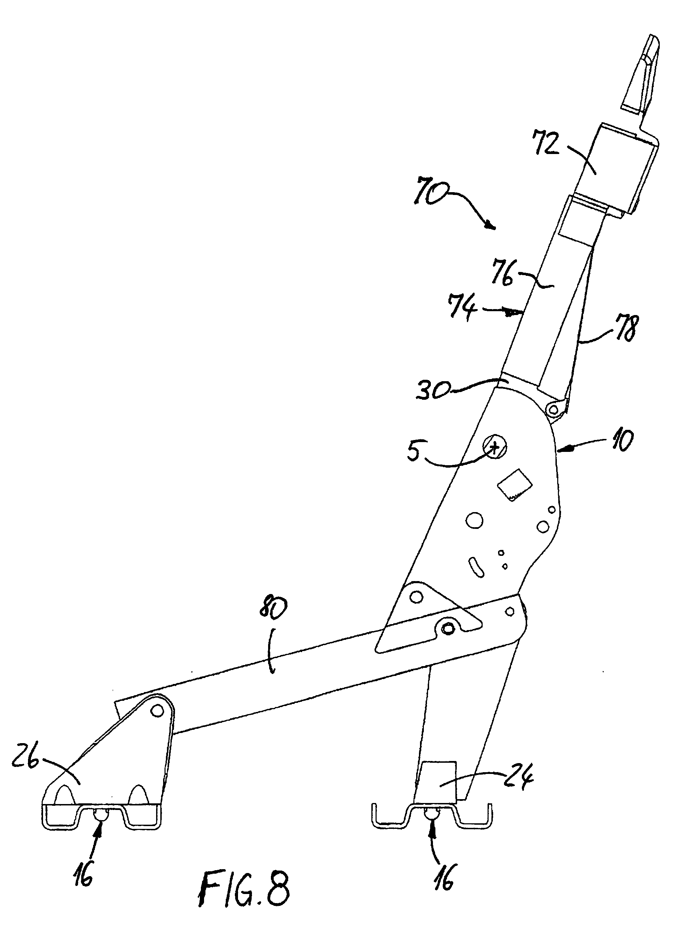

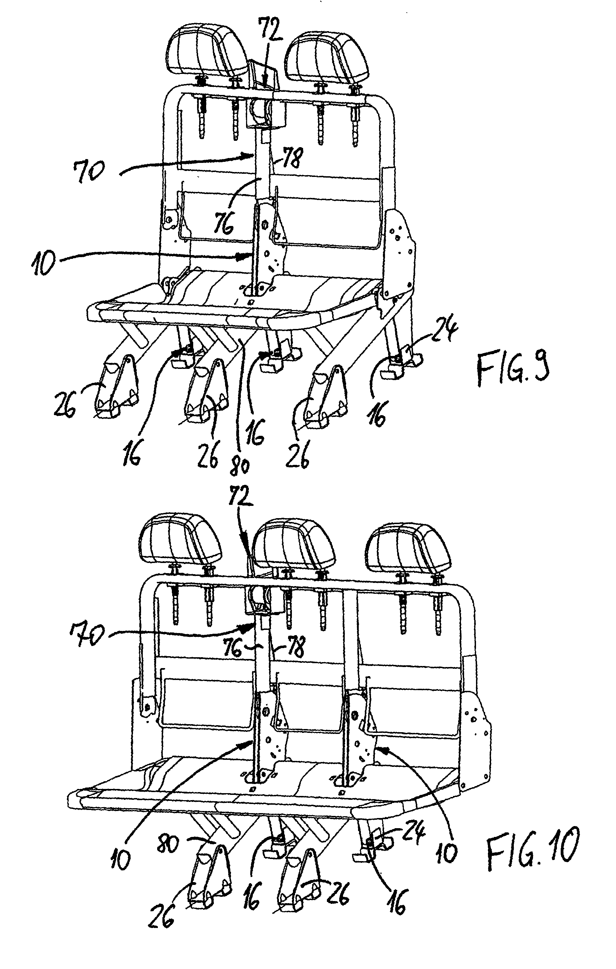

Der in Fig. 1 dargestellte Fahrzeugsitz 1 weist zwei hintere Sitzfüße 24 und zwei vordere Sitzfüße 26 auf. Dabei sind nur die hinteren Sitzfüße 24 über entsprechende Sitzfußverriegelungen 16 lösbar, während die vorderen Sitzfüße 26 ortsfest im Fahrzeug montiert sind, wobei aber der Fahrzeugsitz 1 schwenkbar mit den vorderen Sitzfüßen 26 verbunden ist. Hierdurch kann der gesamte Fahrzeugsitz 1 in der Tischposition der Rückenlehne 4 nach Lösen der hinteren Sitzfüße 24 durch Entriegeln der Sitzfußverriegelungen 16 umgeklappt werden ("Einrollfunktion" des Sitzes). Entsprechendes gilt auch für die in Fig. 9 und 10 dargestellten Ausführungen als Doppel- bzw. Dreiersitz. Wie in Fig. 8 angedeutet ist, kann jedoch auch eine vollständige Lösbarkeit des gesamten Fahrzeugsitzes 1 zwecks Herausnahme aus dem Fahrzeug vorgesehen sein, wozu alle Sitzfüße 24, 26 mit Sitzfußverriegelungen 16 ausgestattet sind.

Erfindungsgemäß weist nun die Verstelleinrichtung 10 zusätzlich spezielle Steuermittel 28 zur Sicherheitsverriegelung derart auf, daß ein Entriegeln der Sitzfußverriegelung(en) 16 in der Fahrtposition der Rückenlehne 4 ausgeschlossen ist. Dabei sind die Steuermittel 28 bevorzugt derart ausgelegt, daß die Sitzfußverriegelung(en) 16 ausschließlich speziell in der Tischposition der Rückenlehne 4 entriegelbar ist (sind), wobei es zur weitergehenden Steigerung der Fahrsicherheit besonders vorteilhaft ist, wenn bei entriegelter Sitzfußverriegelung 16 die Rückenlehne 4 in der Tischposition zwangsverriegelt ist und auch solange zwangsverriegelt bleibt, bis die Sitzfußverriegelung(en) 16 wieder verriegelt ist (sind). Der Fahrzeugsitz 1 kann dann auch nur in der Tischposition wieder fahrzeugseitig befestigt und verriegelt werden. Aufgrund dieser erfindungsgemäßen Ausgestaltung ist es somit ausgeschlossen, daß eine Person während der Fahrt die Sitzfußverriegelung 16 entriegeln kann.

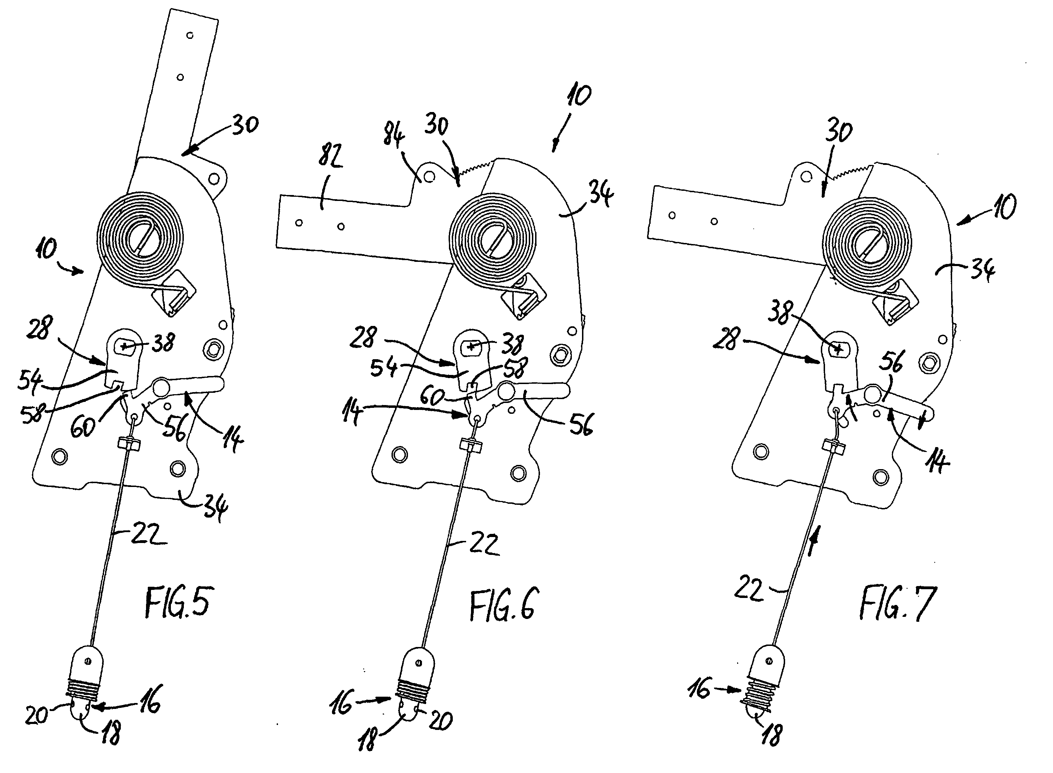

Wie sich nun weiterhin aus den Fig. 2 bis 7 ergibt, bestehen die Arretiermittel 12 im wesentlichen aus einem mit der Rückenlehne 4 zu verbindenden, um die Lehnen-Schwenkachse 5 verschwenkbaren Trägerteil 30 und einem damit zusammenwirkenden Arretierteil 32. Das Arretierteil 32 ist nur in den Fig. 2 bis 4 erkennbar; in den Fig. 5 bis 7 ist es jeweils durch eine von zwei Trägerplatten 34 abgedeckt. Das Trägerteil 30 weist eine Rastverzahnung 36 auf, in die das Arretierteil 32 in verschiedenen Schwenkstellungen des Trägerteils 30 zwecks Sperrung der Schwenkbewegungen eingreifen kann. Hierbei kann die Rastverzahnung 36 - wie dargestellt - aus zwei voneinander in Schwenkrichtung um einen bestimmten Winkel beabstandeten Teilbereichen bestehen, wobei der eine zur Neigungsverstellung dem Bereich der Fahrtposition und der andere dem Bereich der Liegeposition zugeordnet ist. Allerdings kann auch in Abweichung von dem dargestellten Ausführungsbeispiel eine durchgehende Verzahnung vorgesehen sein. Die Rastverzahnung 36 ist derart ausgelegt, daß eine Schwenkverstellung in Inkrementen von beispielsweise etwa 3° möglich ist. Das Arretierteil 32 ist hebelartig um eine zur Lehnen-Schwenkachse 5 parallele Achse 38 schwenkbar und hierzu mittels eines manuell über eine Betätigungswelle 40 verschwenkbaren Hebelelementes 42 etwa radial bezüglich der Lehnen-Schwenkachse 5 und damit gegen die Rastverzahnung 36 oder von dieser weg bewegbar. Wie sich aus Fig. 1 ergibt, ist mit der Betätigungswelle 40 ein seitlich neben dem Sitz angeordneter Handhebel 44 verbunden. Durch Schwenkbewegung des Handhebels 44 in Pfeilrichtung 46 läßt sich die erfindungsgemäße Verstelleinrichtung 10 komfortabel bedienen. Das Hebelelement 42 ist derart federbelastet (Zugfeder 48), daß das Arretierteil 32 zwangsweise in Richtung des Trägerteils 30 und der Rastverzahnung 36 gedrängt wird. Hierzu weist das Arretierteil 32 eine Steuerkurve 50 auf, gegen die das Hebelelement 42 nach Art eines Steuernockens wirkt.

Was nun die speziellen Steuermittel 28 zur Sicherheitsverriegelung betrifft, so ist hierzu zunächst ein starr mit dem Arretierteil 32 verbundenes und daher ebenfalls um die Achse 38 verdrehbares Fühlerelement 52 vorgesehen, welches die jeweilige Stellung des mit der Rückenlehne 4 verbundenen Trägerteils 30 abtastet. Mit diesem Fühlerelement 52 ist ferner ein gemeinsam mit diesem in Abhängigkeit von der Stellung der Rückenlehne 4 bzw. des Trägerteils 30 bewegliches Sperrelement 54 verbunden. Das Sperrelement 54 wirkt zum Sperren oder zur Freigabe mit den Betätigungsmitteln 14 für die Sitzfußverriegelung 16 zusammen.

Hierzu weisen die Betätigungsmittel 14 für die Sitzfußverriegelung 16 einen Schwenkhebel 56 auf, der einerseits über den Bowdenzug 22 (oder dergleichen Bewegungsübertragungselement) auf die Sitzfußverriegelung 16 wirkt, und der andererseits mit dem Sperrelement 54 der Sicherheitsverriegelung zusammenwirkt. Das Sperrelement 54 verhindert in allen Stellungen des Trägerteils 30 mit Ausnahme nur der der Tischposition der Rückenlehne 4 entsprechenden Stellung ein Verschwenken des Schwenkhebels 56 zwecks Entriegeln der Sitzfußverriegelung 16. Ausschließlich in der Tischposition der Rückenlehne 4 kann der Schwenkhebel 56 betätigt werden, da das Sperrelement 54 mit einer Ausnehmung 58 genau einem Fühleransatz 60 des Schwenkhebels 56 gegenübersteht, so daß der Fühleransatz 60 beim Verschwenken des Schwenkhebels 56 in die Ausnehmung 58 eingreifen kann. In dieser Stellung dient der in der Ausnehmung 58 sitzende Fühleransatz 60 auch zur sicheren Arretierung des Trägerteils 30 gegen Hochklappen der Rückenlehne 4 aus der Tischposition, indem über das Sperrelement 54 auch das damit drehfest verbundene Fühlerelement 52 in einer Arretierausnehmung 62 des Trägerteils 30 gehalten wird. Hierzu wird insbesondere auf die Darstellung in Fig. 4 hingewiesen. Somit wirkt das Fühlerelement 52 gleichzeitig auch als Sperrelement für das Trägerteil 30 und damit auch für die Rückenlehne 4.

Wie sich noch aus Fig. 2 ergibt, ist der Schwenkhebel 56 bevorzugt als wippenartig um eine Achse 64 verschwenkbarer Doppelhebel ausgebildet, wobei ein Hebelteil den mit dem Sperrelement 54 zusammenwirkenden Fühleransatz 60 aufweist, während der andere Hebelteil mit einem zusätzlichen Handhebel 66 entsprechend den eingezeichneten Pfeilen zusammenwirkt. In Fig. 5 ist erkennbar, daß in der dargestellten Fahrtstellung ein Entriegeln der Sitzfußverriegelung 16 nicht möglich ist, weil der Schwenkhebel 56 durch Anlage des Fühleransatzes 60 an dem Sperrelement 54 gegen Verschwenken gesperrt ist. Gemäß Fig. 6 wird durch Verschwenken des Trägerteils 30 in die der Tischposition entsprechende Stellung erreicht, daß das Sperrelement 54 mit seiner Ausnehmung 58 in einen Bereich bewegt wird, in dem die Ausnehmung 58 einen Freiraum zum Eingreifen des Fühleransatzes 60 des Schwenkhebels 56 bildet. Deshalb kann gemäß Fig. 7 der Schwenkhebel 56 zum Entriegeln der Sitzfußverriegelung 16 betätigt werden. In dieser Stellung nach Fig. 7 ist das Trägerteil 30 gesperrt (vgl. hierzu die Bezugsziffern 52 und 62 in Fig. 4).

In Fig. 8 ist nun ein Gurtintegrationsmodul 70 dargestellt, welches zur Integration einer Sicherheitsgurt-Halterung 72 im von dem Gelenkbereich (Achse 5) abgekehrten, oberen Bereich der Rückenlehne 4 des Fahrzeugsitzes 1 dient. Dabei ist die Sicherheitsgurt-Halterung 72, die bevorzugt von einer Aufwickeleinrichtung eines Automatikgurtes gebildet ist, über ein längliches Trägerelement 74 im Gelenkbereich der Rückenlehne 4 abgestützt. Erfindungsgemäß besteht hierbei das Trägerelement 74 zur Bildung eines kraftaufnehmenden, starren Dreieckträgers aus einem in Fahrtrichtung gesehen vorderen Druckprofil 76 und einer hinteren Zugstrebe 78. Das Druckprofil 76 ist mit Vorteil als geschlossenes Rohrprofil ausgebildet, während als Zugstrebe 78 auch ein gegebenenfalls flexibles, seilartiges Zugelement verwendet werden kann. In bevorzugter Ausgestaltung des Gurtintegrationsmoduls 70 ist das Trägerelement 74 im Gelenkbereich mit einer erfindungsgemäßen Verstelleinrichtung 10 zur Neigungsverstellung verbunden, wie sie oben bereits eingehend beschrieben wurde. Es kann allerdings auch eine beliebige andere Verstelleinrichtung eingesetzt werden.

Es ist weiterhin vorteilhaft, wenn das Trägerelement 74 - wie dargestellt insbesondere mittelbar über die Verstelleinrichtung - mit dem ersten Sitzfuß 24 sowie über einen vom Gelenkbereich bzw. von der Verstelleinrichtung 10 ausgehenden Stützträger 80 mit dem in Fahrzeug-Längsachsenrichtung beabstandeten zweiten Sitzfuß 26 verbunden bzw. verbindbar ist. Der Stützträger 80 bildet zusammen mit dem Trägerelement 74 einen Stützwinkel, der zumindest in der Fahrtpositionen einen rechten bis stumpfen Winkel einschließt. Diese Anordnung gewährleistet eine hohe Stabilität zur Aufnahme der beispielsweise in einem Crashfall auftretenden Reaktionsmomente von mindestens 5.000 Nm.

Gemäß Fig. 8 sind das Druckprofil 76 und die Zugstrebe 78 jeweils einseitig an dem Trägerteil 30 in voneinander beabstandeten Punkten befestigt, so daß sie beim Verschwenken der Rückenlehne 4 gemeinsam um die Lehnen-Schwenkachse 5 verschwenkbar sind. Zum Befestigen des Druckprofils 78 weist das Trägerteil 30 gemäß Fig. 2 einen Hebelabschnitt 82 auf, und ein seitlich vorspringender Ansatz 84 dient zum Befestigen der Zugstrebe 78.

Das Gurtintegrationsmodul 70 kann in verschiedenartigen Sitzausführungen äußerst variabel eingesetzt werden.

Beispielsweise ist bei dem in Fig. 9 dargestellten Doppelsitz nur im mittleren Bereich ein entsprechendes Gurtintegrationsmodul 70 angeordnet, welches die obere Sicherheitsgurthalterung für einen der beiden Sitze trägt. Diese Ausführungsform eignet sich für Zweiersitze beispielsweise in Transportern oder dergleichen, wobei einer der beiden Sitze relativ weit von einem ortsfesten Karosserieteil entfernt ist.

Bei der in Fig. 10 dargestellten Dreier-Sitzbank ist beispielhaft ein Gurtintegrationsmodul 70 nur für den mittleren Sitz vorgesehen. Hierbei werden für die äußeren Sitze die entsprechenden Gurthalterungen fahrzeugseitig befestigt. Allerdings ist es ebenfalls möglich, für zwei oder alle drei Sitze entsprechende Gurtintegrationsmodule 70 vorzusehen, sofern die Karosserieteile zur Befestigung der Sitzfüße 24, 26 steif genug sind, um die Reaktionskräfte aufnehmen zu können.

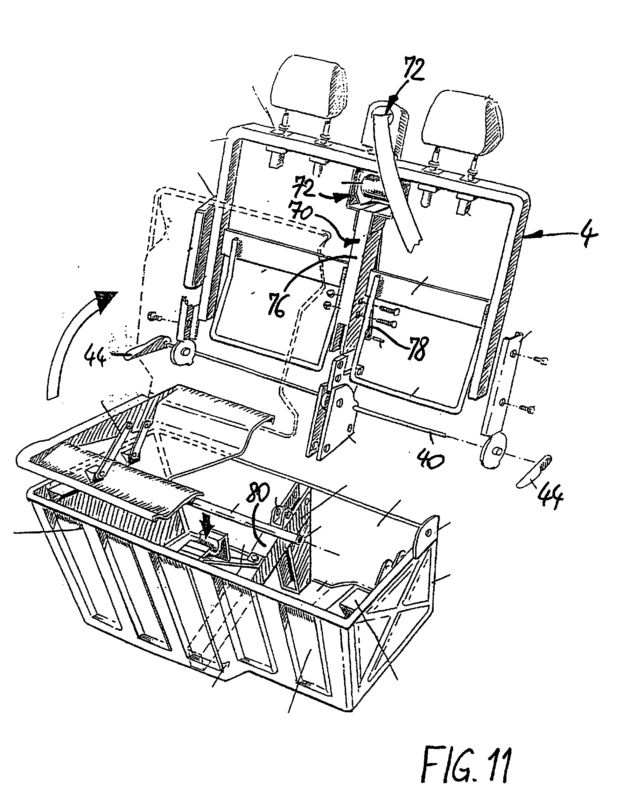

In Fig. 11 ist die Anwendung eines Gurtintegrationsmoduls 70 bei einer solchen Sitzbank veranschaulicht, deren Unterteil starr, d.h. praktisch unlösbar im Fahrzeug befestigt ist. Hierbei entfallen somit alle Mittel zur lösbaren Sitzverriegelung sowie deshalb auch die Steuermittel zur Sicherheitsverriegelung. Allerdings können viele der erfindungsgemäßen Bestandteile und Komponenten sehr variabel auch für diese Anwendung eingesetzt werden.

Die Erfindung ist nicht auf die dargestellten und beschriebenen Ausführungsbeispiele beschränkt, sondern umfaßt auch alle im Sinne der Erfindung gleichwirkenden Ausführungen. So können beispielsweise anstatt der beschriebenen Arretiermittel 12 auch nahezu beliebige andere Mittel vorgesehen sein, mit denen eine Neigungsverstellung der Rückenlehne 4 gewährleistet werden kann.

## Patentansprüche

1. Verstelleinrichtung (10) für eine - zumindest zwischen einer auf ein Sitzteil (2) geklappten Tischposition und einer vom Sitzteil (2) hochgeklappten Fahrtposition - verschwenkbar gelagerte Rückenlehne (4) eines Fahrzeugsitzes (1), mit Arretiermitteln (12) zum Arretieren der in die Fahrtposition hochgestellten Rückenlehne (4) in bezüglich ihrer Neigung verschiedenen Stellungen, mit Betätigungsmitteln (14) für mindestens eine zum fahrzeugseitigen, zumindest teilweise Lösen des Fahrzeugsitzes (1) entriegelbare Sitzfußverriegelung (16), sowie mit Steuermitteln (28) zur Sicherheitsverriegelung der Betätigungsmittel (14) derart, daß ein Entriegeln der Sitzfußverriegelung (16) in der Fahrtposition der Rückenlehne (4) ausgeschlossen ist, wobei die Steuermittel (28) zur Sicherheitsverriegelung ein die jeweilige Stellung der Rückenlehne (4) abtastendes Fühlerelement (52), und ein gemeinsam mit dem Fühlerelement (52) in Abhängigkeit von der Stellung der Rückenlehne (4) bewegliches Sperrelement (54) aufweisen, wobei das Sperrelement (54) zum Sperren oder zur Freigabe mit den Betätigungsmitteln (14) für die Sitzfußverriegelung (16) zusammenwirkt,
**dadurch gekennzeichnet, dass**
die Betätigungsmittel (14) für die Sitzfussverriegelung (16) einen Schwenkhebel (56) aufweisen, der über einen Bowdenzug (22) oder dergleichen auf die Sitzfussverriegelung (16) wirkt, wobei das Sperrelement (54) eine Ausnehmung (58) und der Schwenkhebel (56) einen Fühleransatz (60) derart aufweisen, dass der Schwenkhebel (56) ausschließlich in der Tischposition der Rückenlehne (4) betätigbar ist, indem die Ausnehmung (58) in der Tischposition dem Fühleransatz (60) gegenübersteht, so dass der Fühleransatz (60) beim Verschwenken des Schwenkhebels (56) in die Ausnehmung (58) eingreift.

2. Verstelleinrichtung nach Anspruch 1,
**dadurch gekennzeichnet, dass**
der Schwenkhebel (56) als wippenartig um eine Achse (64) verschwenkbarer Doppelhebel ausgebildet ist, wobei an einem Hebelteil der mit dem Sperrelement (54) zusammenwirkende Fühleransatz (60) und der Bowdenzug (22) oder dergleichen angeordnet sind, während ein anderer Hebelteil mit einem zusätzlichen Handhebel (66) zusammenwirkt.

3. Verstelleinrichtung nach Anspruch 1 oder 2,
**dadurch gekennzeichnet, daß** die Steuermittel (28) zur Sicherheitsverriegelung derart ausgelegt sind, daß die Sitzfußverriegelung (16) ausschließlich in der Tischposition der Rückenlehne (4) entriegelbar ist, wobei vorzugsweise bei entriegelter Sitzfußverriegelung (16) die Rückenlehne (4) in der Tischposition zwangsverriegelt ist.

4. Verstelleinrichtung nach einem der Ansprüche 1 bis 3,
**gekennzeichnet dadurch** eine Ausgestaltung für eine Rückenlehne (4), die über einen Winkelbereich von etwa 180° hinweg zwischen der Tischposition und einer über die Fahrtposition hinaus vom Sitzteil (2) weggeklappten Liegeposition verschwenkbar ist.

5. Verstelleinrichtung nach einem der Ansprüche 1 bis 4,
**dadurch gekennzeichnet, daß** die Arretiermittel (12) aus einem mit der Rückenlehne (4) um eine Lehnen-Schwenkachse (5) verschwenkbaren und eine Rastverzahnung (36) aufweisenden Trägerteil (30) sowie einem mit der Rastverzahnung (36) des Trägerteils (30) zusammenwirkenden Arretierteil (32) bestehen.

6. Verstelleinrichtung nach Anspruch 5,
**dadurch gekennzeichnet, daß** das Arretierteil (32) hebelartig um eine zur Lehnen-Schwenkachse (5) parallele Achse (38) schwenkbar und mittels eines manuell über eine Betätigungswelle (40) verschwenkbaren Hebelelementes (42) etwa radial bezüglich der Lehnen-Schwenkachse (5) gegen die Rastverzahnung (36) oder von dieser weg bewegbar ist.

7. Verstelleinrichtung nach einem der Ansprüche 1 bis 6,
**dadurch gekennzeichnet, daß** die Verstelleinrichtung (10) über ein Trägerelement (74) mit einer oberen Sicherheitsgurt-Halterung (72) derart verbunden ist, dass ein Gurtintegrationsmodul (70) gebildet wird.

8. Verstelleinrichtung nach Anspruch 7,
**dadurch gekennzeichnet, daß** das Trägerelement (74) zur Bildung eines kraftaufnehmenden Dreieckträgers aus einem in Fahrtrichtung gesehen vorderen Druckprofil (76) und einer hinteren Zugstrebe (78) besteht.

9. Verstelleinrichtung nach Anspruch 7 oder 8,
**dadurch gekennzeichnet, daß** das Gurtintegrationsmodul (70) im Bereich der Verstelleinrichtung (10) mit einem ersten Sitzfuß (24) sowie über einen vom Bereich der Verstelleinrichtung (10) ausgehenden Stützträger (80) mit einem in Fahrzeug-Längsachsenrichtung beabstandeten zweiten Sitzfuß (26) verbunden bzw. verbindbar ist.

10. Verstelleinrichtung nach einem der Ansprüche 7 bis 9,
**dadurch gekennzeichnet, daß**
das Gurtintegrationsmodul (70) zur Integration der Sicherheitsgurt-Halterung (72) in einem von einem Gelenkbereich abgekehrten, oberen Bereich der schwenkbaren Rückenlehne (4) des Fahrzeugsitzes (1) angeordnet ist.

## Claims

1. Adjusting device (10) for a backrest (4) of a vehicle seat (1), the backrest being mounted in a pivotable fashion at least between a table position being folded down on to a seat part (2) and a driving position being folded up away from the seat part (2), having latching devices (12) for latching the backrest (4) in the folded-up driving position at different positions of inclination, having operating devices (14) for at least one pedestal locking fixture (16) which can be unlatched in order to at least partially release the vehicle seat (1) in the vehicle, and also having control devices (28) for safety latching of the operating devices (14) in such a way that unlatching of the pedestal locking fixture (16) is prevented in the driving position of the backrest (4), the control devices (28) having a sensing device (52) which senses the particular position of the backrest (4) for the safety latching, and the control devices (28) also having a locking element (54), the latter being movable together with the sensing device (52) according to the position of the backrest (4), the locking element (54) interacting with the operating devices (14) for the pedestal locking fixture (16) to lock or release, **characterized in that** the operating devices (14) for the pedestal locking fixture (16) have a pivoted lever (56), the latter acting via a Bowden cable (22) or similar on the pedestal locking fixture (16), the locking element (54) having a recess (58) and the pivoted lever (56) having a sensing protrusion (60) which permit the pivoted lever (56) only to be operated in the table position of the backrest (4), the recess (58) being positioned opposite the sensing protrusion (60) in the table position, so that the sensing protrusion (60) engages in the recess (58) when the pivoted lever (56) is pivoted.

2. Adjusting device according to Claim 1, **characterized in that** the pivoted lever (56) is formed as a rocker-like dual lever, the latter being pivotable around a pin (64), the sensing protrusion (54) which interacts with the locking element (60) and the Bowden cable (22) or similar being arranged on one of the parts of the lever, the other part of the lever interacting with an additional manual lever (66).

3. Adjusting device according to Claim 1 or Claim 2, **characterized in that** the control devices (28) for safety latching are designed in such a way that the pedestal locking fixture (16) can only be unlatched in the table position of the backrest (4), the backrest (4) being preferably forcibly locked in the table position when the pedestal locking fixture (16) is unlatched.

4. Adjusting device according to one of Claims 1 to 3, **characterized by** a design for a backrest (4) which can be tilted through an angular range of approximately 180° between the table position and a lying position folded away from the seat part (2) beyond the driving position.

5. Adjusting device according to one of Claims 1 to 4, **characterized in that** the latching devices (12) comprise a support part (30), the latter being pivotable together with the backrest (4) around a backrest pivot axis (5) and having ratchet teeth (36), as well as a latching part (32) interacting with the ratchet teeth (36) of the support part (30).

6. Adjusting device according to Claim 5, **characterized in that** the latching part (32) can be pivoted lever-like around a pin (38) parallel to the backrest pivot axis (5), and **in that** the latching part (32) can be moved in an approximately radial direction in relation to the backrest pivot axis (5) towards or away from the ratchet teeth (36) by means of a lever element (42) which can be pivoted manually via an actuating shaft (40).

7. Adjusting device according to one of the Claims 1 to 6, **characterized in that** the adjusting device (10) is connected via a support element (74) to an upper seatbelt mounting (72) in such a way that a seatbelt integration module (70) is formed.

8. Adjusting device according to Claim 7, **characterized in that** the support element (74) comprises a front pressure profile (76) viewed in the direction of travel of the vehicle and a rear tie rod (78) for the purpose of forming a load bearing triangulated bracket.

9. Adjusting device according to Claim 7 or Claim 8, **characterized in that** the seatbelt integration module (70) is connected or can be connected to a first pedestal (24) in the area of the adjusting device (10) and by means of a support bracket (80), the latter starting in the area of the adjusting device (10), to a second pedestal (26) set at a distance in the longitudinal axis direction of the vehicle.

10. Adjusting device according to one of Claims 7 to 9, **characterized in that** the seatbelt integration module (70) is positioned for integration of the seatbelt mounting (72) in an upper area of the pivotable backrest (4) of the vehicle seat (1) facing away from a joint area.

## Revendications

1. Dispositif de réglage (10) d'un dossier (4) monté sur un siège de véhicule (1) et pivotant - entre au moins une position table rabattue sur une partie du siège (2) et une position de marche relevée de cette partie du siège (2) - qui comporte des moyens de blocage (12) pour bloquer dans différentes positions relativement à son inclinaison, le dossier (4) relevé en position de marche, avec des moyens d'actionnement (14), pour au moins un verrouillage du pied de siège (16) déverrouillable, afin de desserrer au moins partiellement le siège du véhicule (1) côté véhicule, et comportant également des moyens de commande (28) pour le verrouillage de sécurité des moyens d'actionnement (14), de telle sorte qu'un déverrouillage du verrouillage du pied de siège (16), dans la position de marche du dossier (4), soit exclu, tandis que les moyens de commande (28) pour le verrouillage de sécurité présentent un élément capteur (52) qui analyse chaque fois la position du dossier (4), et un élément de blocage (54) qui en même temps que l'élément capteur (52) est mobile en fonction de la position du dossier (4), tandis que l'élément de blocage (54) pour le blocage ou pour le déblocage agit conjointement aux moyens d'actionnement (14) pour le verrouillage du pied de siège (16), **caractérisé en ce que** les moyens d'actionnement (14) pour le verrouillage du pied de siège (16) présentent un levier pivotant (56) qui agit sur le verrouillage du pied de siège (16) par l'intermédiaire d'un câble Bowden (22) ou similaire, tandis que l'élément de blocage (54) et le levier pivotant (56) présentent respectivement un creux (58) et un capteur ajouté (60), de telle sorte que le levier pivotant (56) est uniquement actionnable dans la position table du dossier (4), étant donné que le creux (58) dans la position table est situé face au capteur ajouté (60), de telle sorte que le capteur ajouté (60) encliquette dans le creux (58) lors du pivotement du levier pivotant (56).

2. Dispositif de réglage selon la revendication 1, **caractérisé en ce que** le levier pivotant (56) est formé comme un double levier pivotant autour d'un axe (64), tandis que sont agencés sur une pièce de levier, le capteur ajouté (60) qui agit en même temps que l'élément de blocage (54) et le câble Bowden (22), pendant qu'une autre pièce de levier agit conjointement à un levier manuel (66) supplémentaire.

3. Dispositif de réglage selon les revendications 1 ou 2, **caractérisé en ce que** les moyens de commande (28) pour le verrouillage de sécurité sont prévus de telle manière que le verrouillage du pied de siège (16) est uniquement déverrouillable dans la position table du dossier (4), tandis que de manière préférentielle, lorsque le verrouillage du pied de siège (16) est déverrouillé, le dossier (4) est obligatoirement verrouillé dans la position table.

4. Dispositif de réglage selon l'une des revendications 1 à 3, **caractérisé par** un agencement pour un dossier (4) qui peut pivoter au-delà d'un secteur d'angle d'environ 180° entre la position table et une position couchette, rabattue au-delà de la position de marche de la partie de siège (2).

5. Dispositif de réglage selon l'une des revendications 1 à 4, **caractérisé en ce que** les moyens de blocage (12) sont constitués d'une pièce de support (30) pivotant avec le dossier (4) autour d'un axe de pivotement adossement (5) et présentant un engrènement à verrouillage (36), ainsi que d'une pièce de blocage (32) agissant conjointement avec l'engrènement à verrouillage (36) de la pièce de support (30).

6. Dispositif de réglage selon la revendication 5, **caractérisé en ce que** la pièce de blocage (32), à la manière d'un levier, est pivotante autour d'un axe, parallèle (38) à l'axe de pivotement adossement (5) et, au moyen d'un élément de levier (42) pivotant manuellement à l'aide d'un arbre de commande (40) situé en quelque sorte radialement, est mobile relativement à l'axe de pivotement adossement (5), contre l'engrènement à verrouillage (36) ou loin de celui-ci.

7. Dispositif de réglage selon l'une des revendications 1 à 6, **caractérisé en ce que** le dispositif de réglage (10), par l'intermédiaire d'un élément de support (74), est raccordé à une bride de support de sangle de sécurité (72), de telle sorte qu'un module d'intégration de sangle (70) est constitué.

8. Dispositif de réglage selon la revendication 7, **caractérisé en ce que** l'élément de support (74) pour la constitution d'un socle triangulaire qui absorbe les efforts, est formé, vu dans le sens de la marche, d'un profil de pression (76) antérieur, et d'un tirant arrière (78).

9. Dispositif de réglage selon les revendications 7 ou 8, **caractérisé en ce que** le module d'intégration de sangle (70) dans le secteur du dispositif de réglage (10) est raccordable à un premier pied de siège (24), et raccordable par l'intermédiaire d'un socle de soutien (80) qui part du secteur du dispositif de réglage (10), à un deuxième pied de siège (26), écarté dans le sens de l'axe longitudinal du véhicule.

10. Dispositif de réglage selon l'une des revendications 7 à 9, **caractérisé en ce que** le module d'intégration de sangle (70) pour l'intégration de la bride de support de la sangle de sécurité (72), détourné par un segment de joint articulé, est agencé dans un secteur supérieur du dossier (4) pivotant du siège du véhicule (1).
